# EUROPÄISCHE PATENTSCHRIFT

(11) **EP 1 751 061 B1**
(45) Veröffentlichungstag und Bekanntmachung des Hinweises auf die Patenterteilung: **16.09.2009**
(21) Anmeldenummer: 05743419.3
(22) Anmeldetag: 12.05.2005
(51) Int. Cl.: C02F 1/00, B01D 35/30

(54) **FILTERKARTUSCHE UND VORRICHTUNG ZUR FILTRATION VON FLÜSSIGKEITEN**
FILTER CARTRIDGE AND DEVICE FOR FILTERING LIQUIDS
CARTOUCHE FILTRANTE ET SYSTEME DE FILTRATION DE LIQUIDES

(30) Priorität: 28.05.2004 DE 102004026188
(43) Veröffentlichungstag der Anmeldung: 14.02.2007
(60) Teilanmeldung: 08168548.9
(73) Patentinhaber: Brita GmbH, 65232 Taunusstein (DE)
(72) Erfinder: WALDE, Hilmar, 65510 Wallbach (DE); GRÖSS, Stefan, 6236 Wilihof / LU (CH); GUCKES, Gunder, 65529 Waldems (DE)
(74) Vertreter: Fuchs
(86) Internationale Anmeldenummer: PCT/EP2005/005161
(87) Internationale Veröffentlichungsnummer: WO 2005/118482

(56) Entgegenhaltungen:
- EP-A- 1 510 503
- WO-A-96/22045
- DE-U1- 20 200 880
- US-A- 6 103 114

## Beschreibung

Die Erfindung betrifft eine Vorrichtung zur Filtration von Flüssigkeiten gemäß dem Oberbegriff des Patentanspruches 1. Die Erfindung bezieht sich auch auf eine Filterkartusche für eine solche Vorrichtung.

Unter Filterkartuschen werden zum einen solche verstanden, die ein siebartiges Gebilde zur mechanischen Filtration aufweisen. Zum anderen werden unter Filterkartuschen solche verstanden, die außer einem siebartigen Gebilde mindestens ein Filtermedium, z. B. in Granulatform, enthalten, das zur chemischen und/oder mechanischen Entfernung und/oder Verminderung von organischen und/oder anorganischen Verunreinigungen dient. Derart ausgestattete Filterkartuschen ermöglichen somit eine nicht-mechanische Filtration, die mit einer mechanischen Filtration kombiniert sein kann. Diese Filterkartuschen werden zur Optimierung von Wasser eingesetzt, wobei unter Optimierung die mechanische und/oder nicht-mechanische Filtration verstanden wird. Hierzu zählt z. B. die Enthärtung und Entkalkung von Trinkwasser.

Vorrichtungen zur Filtration von Flüssigkeiten sind in den verschiedensten Ausführungsformen bekannt.

Es gibt beispielsweise Filtervorrichtungen mit kugelförmigen Filterkartuschen, die von unten an den Einlauftrichter mittels eines Bajonettverschlusses angeschraubt werden, wie dies in der WO 2004/014519 A2 beschrieben wird.

Aus der DE 199 05 601 A1 ist eine Vorrichtung zur Aufbereitung von Flüssigkeiten mit einem Einlauftrichter bekannt, der eine Aufnahmeöffnung mit einem Dichtring aufweist. Die Filterkartusche wird ebenfalls von unten in die Aufnahmeöffnung gesteckt und mittels eines separaten Befestigungsrings in die Aufnahmeöffnung gedrückt. Hierzu ist die Filterkartusche unterhald des Dichtrandes am Kartuschenoberteil mit einer Nut versehen, in die der Befestigungsring mit seinem unteren Abschnitt angreift. Der obere Abschnitt des Befestigungsringes wird in einer Nut eines am Trichterboden angeformten Stutzens geführt. Der Ein- und Ausbau der Filterkartusche ist aufwändig und erfordert besonderes Geschick der Bedienungsperson.

Andere Ausführungen sehen vor, dass der Einlauftrichter in seiner Bodenwand eine Aufnahmeöffnung aufweist, in die die Filterkartusche von oben eingesetzt wird. Die Filterkartusche besitzt in der Regel einen konischen Dichtrand, der am Rand der Aufnahmeöffnung anliegt. Beim Einsetzen kann die Filterkartusche verkanten, so dass nicht die vorgesehene Dichtposition eingenommen wird.

Aus der DE 199 158 29 A1 ist eine Filterkartusche und eine Vorrichtung zur Aufbereitung von Flüssigkeiten bekannt, bei der der Dichtrand zusätzliche Rastmittel aufweist, die mit korrespondierenden Rastmitteln im Bereich der Öffnung des Bodens des Einlauftrichters zusammenwirken. Durch eine Drehbewegung werden die Rastmittel miteinander in Eingriff gebracht.

Bei dieser Ausführung wird die Filterkartusche nur am Rand gehalten und befindet sich im Filtratraum. Wenn es sich um einen Wasserkocher handelt, befindet sich die Filterkartusche damit auch im Kochraum, sodass während des Erwärmens der filtrierten Flüssigkeit eventuell Beeinträchtigungen der Filterkartusche auftreten können. Es ist daher wünschenswert, dass die Filterkartusche vom Filtratraum bzw. Kochraum abgeschirmt angeordnet ist.

Um hier Abhilfe zu schaffen, werden Einlauftrichter mit einer Aufnahmekammer für die Filterkartusche verwendet. Auch in dieser Ausführung liegt der konische Dichtrand der Filterkartusche am Rand der Aufnahmeöffnung der Bodenwand des Einlauftrichters an.

Die Umfangs- und Bodenwand der Filterkartusche ist beabstandet zur Umfangs- und Bodenwand der Aufnahmekammer angeordnet, sodass sich während der Filtration in diesem Zwischenraum zwar filtrierte Flüssigkeit sammeln kann, aber dadurch die Durchflussmenge nicht begrenzt wird. Eine Austassöffnung, die mit einem Verschlusselement versehen ist, befindet sich in der Bodenwand der Aufnahmekammer.

Aus der DE 198 46 583 A1 ist eine solche Wasserfiltereinrichtung mit einer Auffangkanne und mit einem Heizelement bekannt. Der Einlauftrichter besitzt eine Aufnahmekammer, in die die Filterkartusche von oben eingesetzt wird. Die Aufnahmekammer wird von einem Filtereinsatz gebildet, der mit dem Einlauftrichter fest verbunden sein kann oder in die Aufnahmeöffnung einsetzbar ist. Der Filtereinsatz ist an die konische Gestalt der Filterkartusche angepasst und bildet ein Führungselement für die Filterkartusche. Da die Umfangswand der Filterkartusche vollflächig an dem Filtereinsatz anliegt, lassen sich beide Komponenten nur schwer voneinander trennen, insbesondere dann, wenn der Benutzer die Filterkartusche zu tief in den Filtereinsatz drückt. Durch das Ineinandergleiten von zwei konischen Flächen ist es für den Benutzer nicht erkennbar, wann er die Endstellung erreicht hat, die für den optimalen Sitz der Filterkartusche erforderlich ist und die Dichtposition der Filterkartusche definiert.

Die US 4,626,350 beschreibt ein Filtersystem, das über zwei Anschlüsse an eine Wasserleitung angeschlossen wird. Das Filtersystem besteht aus einem Gehäuseober- und Gehäuseunterteil, die nach dem Einsetzen der Filterkartusche miteinander verschraubt werden. Deckel und Bodenwand der Filterkartusche besitzen becherförmige Einstülpungen, in die entsprechend ausgeformte Stutzen der Gehäuseteile zur Zu- und Ableitung des Unfiltrates bzw. Filtrates eingreifen. Zum Wechseln der Filterkartusche müssen beide Gehäuseteile auseinandergeschraubt werden.

Bei allen bekannten Filtervorrichtungen ist es erforderlich die Filterkartusche an die gewünschte Durchflussmenge anzupassen.

Die DE 202 00 880 U1 beschreibt eine Filterkartusche, die am Boden einen Ringwulst aufweist, mit dem die Kartusche am Boden der Aufnahmeöffnung beabstandet angeordnet ist.

Die US-A 6,103,114 betrifft ein Fixiermittel in Form eines bajonettartigen Verriegelungsmechanismus, wobei die Außenseite der Filterkartusche über zylinderförmige Vorsprünge verfügt.

Aus der WO 96/22045 A ist ein Wasserkocher mit Filtereinrichtung bekannt, wobei ein Fixiermittel in Form eines am Boden der Aufnahmekammer angebrachten Doms vorgesehen ist.

DE 103 39 779 A1 beschreibt eine Wasserfiltervorrichtung, bei der die Filterkartusche im oberen Bereich mittels eines oberen Randes oder Dichtrandes durch Klemmsitze mit der Hülse im Wesentlichen dichtend verbunden ist. Diese Hülse weist zwei nach innen ragende keilförmige Federn auf, welche in jeweils eine Nut in der Filterkartusche eingreifen.

Aufgabe der Erfindung ist es, eine Filterkartusche und eine Vorrichtung zur Filtration von Flüssigkeiten bereit zu stellen, bei denen der richtige Sitz der Filterkartusche gewährleistet und für den Benutzer feststellbar ist.

Diese Aufgabe wird mit einer Vorrichtung gelöst, bei der der Einlauftrichter unterhalb der Aufnahmeöffnung mindestens ein erstes Fixiermittel aufweist und die Filterkartusche unterhalb und beabstandet zum Dichtrand mindestens ein zweites Fixiermittel aufweist, das beim Einstecken der Filterkartusche in die Aufnahmeöffnung mit dem ersten Fixiermittel zusammenwirkt, wobei die ersten und zweiten Fixiermittel Rastelemente sind.

Die Filterkartusche ist vorzugsweise in axialer Richtung in die Aufnahmeöffnung einsteckbar.

Die Fixiermittel sind derart angeordnet, dass sie beim Zusammenwirken die Dichtposition der Filterkartusche definieren, d. h. wenn die Fixiermittel zusammenwirken, liegt der Dichtrand der Filterkartusche in seiner vorgesehenen Position am Rand der Aufnahmeöffnung an.

Das Zusammenwirken der Fixiermittel ist mit einem für den Benutzer beim Einstecken der Filterkartusche wahrnehmbaren Widerstand verbunden, der ihm signalisiert, dass die vorgesehene Position der Filterkartusche erreicht ist.

Da die Fixiermittel die Dichtposition der Filterkartusche definieren, ist es von Vorteil, wenn der Abstand zwischen Dichtrand und Fixiermittel möglichst groß gewählt ist. Ein Verkanten oder eine Fehlpositionierung der Filterkartusche wird dadurch verhindert.

Die zweiten Fixiermittel sind deshalb vorzugsweise an der unteren Hälfte, vorzugsweise im unteren Drittel der Filterkartusche, insbesondere im Bereich der Bodenwand der Filterkartusche angeordnet:

Die ersten und/oder die zweiten Fixiermittel können zusätzlich Abstands- und/oder Führungselemente sein. Dies bedeutet, dass ein Fixiermittel eine oder mehrere Funktionen erfüllen kann und dass auch mehrere Fixiermittel mit unterschiedlichen Ausgestaltungen in einer Vorrichtung realisiert werden können.

Die Fixiermittel sind vorzugsweise Vorsprünge oder Vertiefungen. Die Vorsprünge oder Vertiefungen können zylinderförmig, kegelförmig oder kegelstumpfförmig sein. Hierzu zählen beispielsweise auch Ein- und Ausstülpungen oder Wülste.

Im Fall von Rastelementen sind Rastnocken, Rastvertiefungen oder Ringwülste bevorzugt.

Die Fixiermittel können auch Führungselemente sein, was bedeutet, dass die Filterkartusche beim Einsetzen in ihre vorgesehene Position geführt wird. Hierfür eignen sich beispielsweise Vorsprünge und Vertiefungen, insbesondere Einstülpungen an der Filterkartusche und am Halteelement, die beispielsweise zylinderförmig, kegel- oder kegelstumpfförmig ausgestaltet sein können.

Erfindungsgemäß sind die Fixiermittel Rastelemente, die beim Zusammenwirken ineinander greifen. Das Einrasten oder Einschnappen ist in der Regel mit einem Geräusch verbunden, das dem Benutzer signalisiert, dass die Filterkartusche ihre vorgesehene Position erreicht hat.

Die Fixiermittel sind vorzugsweise derart aufeinander abgestimmt, dass das Einstecken der Filterkartusche in axialer Richtung ausreicht, um die Fixiermittel zusammen zu bringen. Dreh-, Kipp- oder sonstige Bewegungen der Filterkartusche sind daher ebenso wenig notwendig wie zusätzliche Bauteile, wie Befestigungsringe oder dergleichen, was das Einsetzen der Filterkartusche insgesamt bedienerfreundlich macht.

Ferner sind die Fixiermittel derart aufeinander abgestimmt, dass sie beim Austausch der Filterkartusche ohne große Kraftanstrengung voneinander gelöst werden können.

Dies wird u. a. dadurch erreicht, dass die kontaktierenden Flächen der Fixiermittel im Falle von Führungselementen klein gehalten werden, um ein Verklemmen der Filterkartusche oder einen Festsitz der Filterkartusche zu vermeiden.

Die Rast- oder Klemmkräfte werden derart gering gehalten, dass die Filterkartusche durch einfaches Herausziehen in axialer Richtung aus der Aufnahmeöffnung entfernt werden kann. Die Rastelemente sind daher vorzugsweise derart ausgebildet, dass eine axiale Bewegung der Filterkartusche ausreicht, um sie einzustecken bzw. zu entfernen.

Vorzugsweise ist das erste Fixiermittel an einem an der Unterseite der Trichterbodenwand angeordneten Halteelement angeordnet. Ein solches Haltelement kann auf verschiedene Weise ausgebildet sein. Bevorzugt ist ein Halteelement in Form eines Haltebügels, der unter der Aufnahmeöffnung diese überspannt.

Gemäß einer weiteren Ausführungsform kann das Halteelement eine in der Trichterbodenwand angeordnete, mindestens eine Auslassöffnung aufweisende Aufnahmekammer sein, die eine Bodenwand und eine Umfangswand aufweist.

Vorzugsweise weist die Bodenwand der Aufnahmekammer mindestens eine erste Einstülpung und die Bodenwand der Filterkartusche mindestens eine die erste Einstülpung übergreifende zweite Einstülpung auf. Diese beiden Einstülpungen können gleitend zusammenwirken und somit Führungselemente bilden. Außerdem können diese Einstülpungen auch mit Rastelementen versehen sein, die beim Einstecken der Filterkartusche ineinander greifen.

Vorzugsweise ist die erste Einstülpung ein an die Bodenwand der Aufnahmekammer angeformter nach innen weisender Zylinder- oder kegelstumpfförmiger Hohlkörper, an dessen freien Rand mindestens ein nach innen weisender kreisbogenförmiger, mindestens eine Auslassöffnung freilassender, erster Wulst angeordnet ist, wobei in der zweiten Einstülpung ein nach außen weisender Dom angeordnet ist, der beim Einstecken der Filterkartusche in den zylinder- oder kegelstumpfförmigen Hohlkörper eingreift.

Bei dieser Ausführungsform wird das erste Führungselement durch den mindestens einen kreisbogenförmigen Wulst gebildet, der an der Außenseite des Doms beim Einschieben der Filterkartusche entlang gleitet. Der Wulst erstreckt sich nicht über den gesamten Innenumfang des Hohlkörpers, so dass ein Freiraum verbleibt, der nach dem Einstecken des Doms, der das zweite Führungselement darstellt, die Auslassöffnung bildet. Mehrere kreisbogenförmige Wülste oder Wulstsegmente können in Umtangsrichtung beabstandet zueinander angeordnet sein, so dass mehrere Auslassöffnungen geschaffen werden.

Gemäß einer weiteren Ausführungsform weist der Dom an seiner Außenseite mindestens einen kreisbogenförmigen zweiten Wulst auf, der beim Einstecken der Filterkartusche den ersten Wulst hintergreift. Hierbei bilden die ersten und zweiten Wülste Rastelemente.

Vorzugsweise sind der Hohlkörper und der Dom jeweils mittig angeordnet. Diese Anordnung hat den Vorteil, dass nur jeweils ein Fixiermittel benötigt wird und dadurch der für die Fixiermittel benötigte Raum klein gehalten werden kann und damit mehr Volumen für das Filtermedium zur Verfügung steht.

Vorzugsweise weist die Aufnahmekammer die erste Einstülpung im Bereich von Boden- und Umfangswand auf und die Filterkartusche die zweite Einstülpung ebenfalls in der Boden- und Umfangswand.

Die erste und die zweite Einstülpung können vorzugsweise quaderförmig ausgebildet sein, so dass beide Einstülpungen jeweils zwei Seitenwände, eine Stimwand und eine Deckwand besitzen. Beide Einstülpungen können als Führungselemente ausgebildet sein, die ineinander greifen oder ineinander gleiten.

Es ist von Vorteil, wenn die erste Einstülpung an zwei Seitenwänden erste Rastmittel und die zweite Einstülpung an zwei Seitenwänden zweite Rastmittel aufweist. Diese Ausführung hat den Vorteil, dass größere Rastkräfte realisiert werden können z. B. in Geräten, in denen Wasser aufgeheizt wird. Die beiden Einstülpungen können unterschiedliche Abmessungen aufweisen, was den Vorteil hat, dass es nur eine Positionierungsmöglichkeit für die Filterkartusche gibt.

Die Fixierelemente ermöglichen eine genaue Positionierung der Filterkartusche, so dass nicht nur die optimale Lage des Dichtrandes an der Aufnahmeöffnung gewährleistet wird, sondern auch ein definierter Abstand der Filterkartusche zur Wand der Aufnahmekammer einstellbar ist. Der Querschnitt des Strömungskanals zwischen Auslauföffnung der Filterkartusche und Auslassöffnung der Aufnahmekammer ist dadurch ebenfalls gezielt einstellbar.

Dies ermöglicht es weiterhin, dass zwischen der Auslauföffnung der Filterkartusche und der Auslassöffnung der Aufnahmekammer eine Drosseleinrichtung angeordnet werden kann.

Die Strömungsmenge durch die Filterkartusche hängt im Wesentlichen von der Art des Filtermediums und der Größe der Auslauföffnung/en der Filterkartusche ab. Es kann je nach Anwendungszweck wie z. Bsp. in Filtersystemen mit hohem Leistungsanspruch an das Filtermedium erforderlich werden, die von der Filterkartusche vorgegebene Strömungsmenge zu reduzieren. Um dies zu realisieren, wurden bisher Änderungen an der Kartusche vorgenommen, d.h. für jede gewünschte Strömungsmenge mussten entsprechende Filterkartuschen hergestellt und vorgehalten werden. Der Vorteil der Drosseleinrichtung besteht nun zum einen darin, dass nur ein Filterkartuschentyp erforderlich ist, und die Strömungsmenge über die Wahl einer entsprechenden Aufnahmekammer oder eines entsprechenden Einlauftrichters eingestellt werden kann.

Zum anderen ist es bei dieser Gestaltung vorteilhaft, dass bei Nichtvorhandensein der Kartusche das Gerät ohne Durchflussrestriktion betrieben werden kann:

Vorzugsweise ist die Drosseleinrichtung derart ausgelegt, dass die von der Filterkartusche gelieferte Strömungsmenge um mehr als 0 bis 95 %, insbesondere um 10 bis 80 %, besonders bevorzugt um 20 bis 70 % reduziert werden kann.

Vorzugsweise ist die Filterkartusche im Bereich zwischen Auslauföffnung und Auslassöffnung beabstandet zur Umfangswand und/oder Bodenwand der Aufnahmekammer angeordnet, wodurch ein Strömungskanal gebildet wird. Der minimale Querschnitt des Strömungskanals bildet dann die Drosseleinrichtung.

Durch die Fixiermittel lässt sich der Querschnitt des Strömungskanals exakt einstellen.

Eine bevorzugte Ausführungsform sieht vor, dass mindestens ein Fixiermittel die Drosseleinrichtung bildet. Wenn beispielsweise ein an der Filterkartusche oder der Aufnahmekammer angeformtes Abstandselement im Strömungskanal angeordnet ist, wird der Querschnitt an dieser Stelle verringert. Über die Abmessungen eines oder mehrerer solcher Abstandselemente lässt sich auf einfache Weise die Wirkung der Drosseleinrichtung einstellen.

Vorzugsweise sind die Einstülpungen von Filterkartusche und Aufnahmekammer mindestens in Teilbereichen beabstandet zueinander angeordnet, so dass zwischen den Einstülpungen ein reduzierter Strömungsquerschnitt eingestellt ist, der die Drosseleinrichtung bildet.

Alternativ kann oder können die Auslassöffnung oder die Auslassöffnungen die Drosseleinrichtung bilden, wobei der Querschnitt der Auslassöffnung/-öffnungen kleiner ist als der Querschnitt der Auslauföffnung/Auslauföffnungen der Filterkartusche.

Eine bevorzugte Ausführung sieht vor, die durch den Wulst oder die Wülste am zylinder- oder kegelstumpfförmigen Hohlkörper definierte/n Auslassöffnung/Auslassöffnungen mit ihrem Querschnitt so zu wählen, dass diese Auslassöffnung/en eine Drosselwirkung entfaltet/en.

Die Drosseleinrichtung kann bei vorgegebener Filterkartusche durch die Auswahl einer Aufnahmekammer mit entsprechenden Abmessungen oder mit entsprechendem Querschnitt der Auslassöffnung einstellbar sein.

Die gewünschte Strömungsmenge kann somit über den Einlauftrichter eingestellt werden, was insofern von Vorteil ist, als der Einlauftrichter im Vergleich zur Filterkartusche keinen Verbrauchsartikel darstellt. Der Verbrauchsartikel Filterkartusche braucht nur in einer Ausführung hergestellt und bereitgehalten zu werden und über die Wahl des Einlauftrichters lässt sich die Strömungsmenge definieren. Dadurch wird es möglich, die Fertigungskosten für die Vorrichtung und die Kosten für das Ersatzteilgeschäft deutlich zu reduzieren.

Vorzugsweise ist die Auslassöffnung der Aufnahmekammer oberhalb der Auslauföffnung der Filterkartusche angeordnet, so dass eine syphonartige Anordnung geschaffen wird. Ein solche syphonartige Anordnung hat den Vorteil insbesondere in Verbindung mit der Drosseleinrichtung, dass das Filtermedium auch bei Filtrationspausen feucht gehalten wird, und somit ohne erneute Konditionierung seine volle Funktionsbereitschaft gewährleistet ist.

Die Filterkartusche, die in den Einlauftrichter einsetzbar ist, und die ein Kartuschenoberteil mit mindestens einer Einlauföffnung, ein Kartuschenunterteil mit mindestens einer Auslauföffnung und einen Dichtrand aufweist, ist gekennzeichnet durch mindestens ein Fixiermittel, das unterhalb und beabstandet zum Dichtrand angeordnet ist, wobei das Fixiermittel ein Rastelement ist.

Das Fixiermittel an der Filterkartusche ist vorzugsweise zusätzlich ein Abstands- und/oder Führungselement. Die Fixiermittel können Vertiefungen und Vorsprünge sein, wobei die Vorsprünge oder Vertiefungen vorzugsweise zylinderförmig, kegelförmig oder kegelstumpfförmig ausgeführt sind. Das Rastelement kann eine Rastnocke, eine Rastvertiefung oder ein Ringwulst sein.

Das Fixiermittel ist vorzugsweise im Bereich der unteren Hälfte der Filterkartusche, vorzugsweise im Bereich des unteren Drittels und insbesondere im Bereich der Bodenwand der Filterkartusche angeordnet.

Das Kartuschenunterteil weist mindestens eine Einstülpung auf, wobei in der Einstülpung vorzugsweise ein nach außen weisender Dom angeordnet ist.

Gemäß einer weiteren Ausführungsform kann die Einstülpung auch quaderförmig ausgeführt sein.

Beispielhafte Ausführungsformen der Erfindung werden nachfolgend anhand der Zeichnungen näher erläutert.

Es zeigen:
- Figur 1 a, b: Vertikalschnitte durch einen Einlauftrichter mit eingesetzter Filterkartusche gemäß zweier nicht erfindungsgemäßer Ausführungsformen,
- Figur 2: eine perspektivische Ansicht teilweise im Schnitt eines Einlauftrichters gemäß einer weiteren Ausführungsform,
- Figur 3: einen Vertikalschnitt durch einen Einlauftrichter mit eingesetzter Filterkartusche gemäß einer weiteren Ausführungsform, wobei sich die Filterkartusche noch nicht in ihrer Endposition befindet,
- Figur 4: einen Schnitt längs der Linie F-F durch die in Figur 3 gezeigte Vorrichtung,
- Figur 5: eine vergrößerte Schnittdarstellung des Bereichs der beiden Einstülpungen gemäß der Figur 3,
- Figur 6: eine vergrößerte Schnittdarstellung des Bereichs der beiden Einstülpungen nach eingesetzter und positionierter Filterkartusche,
- Figur 7a: eine Draufsicht auf den kegelstumpfförmigen Hohlkörper gemäß der Figur 3,
- Figur 7b: eine Draufsicht auf einen kegelstumpfförmigen Hohlkörper gemäß einer weiteren Ausführungsform,
- Figur 8: eine Vertikalschnitt durch den kegelstumpfförmigen Hohlkörper längs der Linie H-H in Figur 7b,
- Figur 9: eine vergrößerte Schnittdarstellung des unteren Bereichs der beiden Einstülpungen gemäß einer weiteren Ausführungsform entlang der Linie G-G des kegelstumpfförmigen Hohlkörpers in Fig. 7a,
- Figur 10: einen Vertikalschnitt durch einen Einlauftrichter mit einer eingesetzten Filterkartusche gemäß einer weiteren Ausführungsform,
- Figur 11: einen Schnitt längs der Linie B-B der in Figur 17 gezeigten Vorrichtung,
- Figur 12: eine vergrößerte Schnittdarstellung des Bereiches der Auslassöffnung der in Fig. 17 gezeigten Vorrichtung.

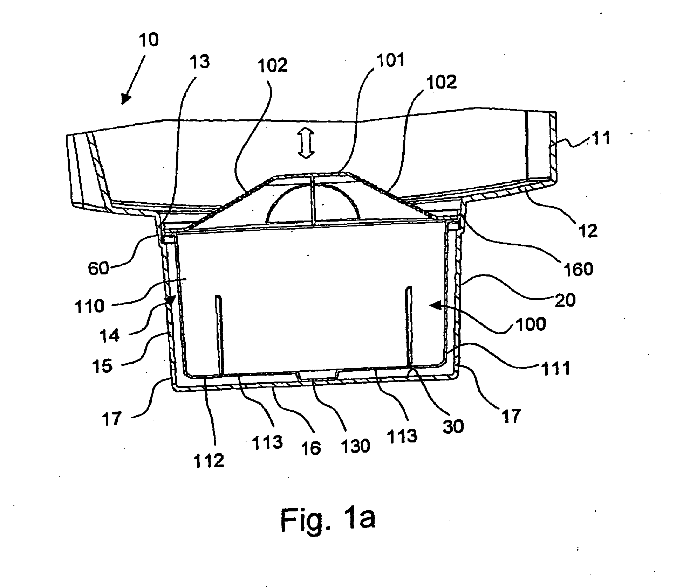

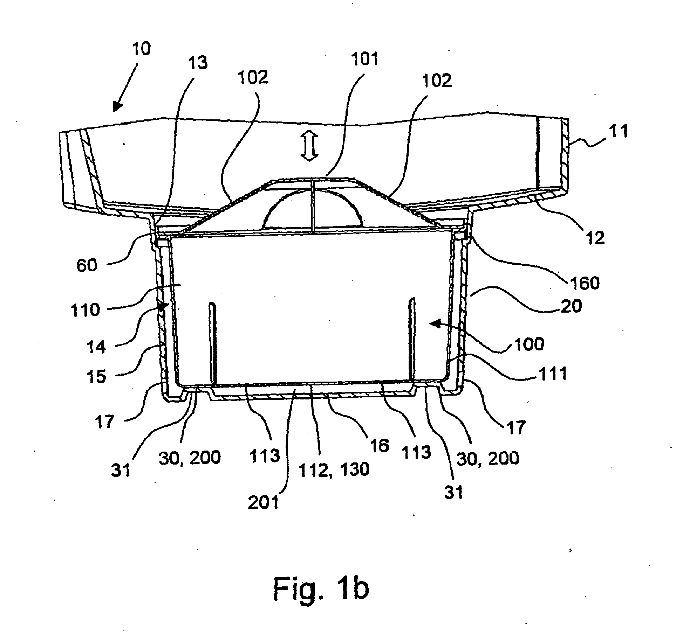

In der Figur 1 a ist ein Vertikalschnitt durch einen Einlauftrichter 10 mit eingesetzter Filterkartusche 100 dargestellt. Der Einlauftrichter 10 weist eine Umfangswand 11 auf, die in eine Trichterbodenwand 12 übergeht, die eine Aufnahmeöffnung 13 besitzt. Von der Aufnahmeöffnung 13 erstreckt sich nach unten als Halteelement 20 eine Aufnahmekammer 14, die wiederum eine Umfangswand 15 und eine Bodenwand 16 aufweist.

In diese Aufnahmekammer 14 ist die Filterkartusche 100 in axialer Richtung von oben eingesetzt, die ein Kartuschenoberteil. 101 und ein Kartuschenunterteil 110 aufweist. Das Kartuschenoberteil 101 ist dachförmig ausgestaltet und besitzt Einlauföffnungen 102. Im Verbindungsbereich von Kartuschenoberteil 101 und Kartuschenunterteil 110 ist ein Dichtrand 160 vorgesehen, der im Bereich der Aufnahmeöffnung 13 am Dichtsitz 60 des Einlauftrichters 10 anliegt.

Das Kartuschenunterteil 110 der Filterkartusche 100 besitzt eine Umfangswand 111 und eine Bodenwand 112, in der Auslauföffnungen 113 angeordnet sind.

Die Aufnahmekammer 14 ist derart ausgestaltet, dass die Umfangswand 111 der Filterkartusche 100 beabstandet zur Umfangswand 15 und zur Bodenwand 16 angeordnet ist. Die filtrierte Flüssigkeit sammelt sich somit im unteren Bereich der Aufnahmekammer 14 und fließt über die rechts und links eingezeichneten Auslassöffnungen 17 ab.

Die Aufnahmekammer 14 mit der Umfangswand 15 und der Bodenwand 16 bildet ein Halteelement 20 für die Filterkartusche 100. An der Bodenwand 112 der Filterkartusche 100 ist mittig ein zweites ' Fixiermittel 130 angeformt, das in der hier gezeigten Ausführungsform ein Abstandselement darstellt. Dieses zweite Fixierelement 130 liegt auf der Innenseite der Bodenwand 16 auf, die damit die Funktion eines ersten Fixierelementes 30 übernimmt.

Die Filterkartusche 100 wird in axialer Richtung, wie dies durch den Doppelpfeil eingezeichnet ist, in die Aufnahmekammer 14 des Einlauftrichters 10 eingesetzt bzw. herausgenommen. Wenn die beim Einsetzen vorgesehene Endposition erreicht ist, liegt das zweite Fixiermittel 130 auf dem ersten Fixiermittel 30, d. h. der Bodenwand 16 der Aufnahmekammer 14 auf. Die Bedienungsperson merkt dies durch den hierbei auftretenden Widerstand, wodurch der Bedienungsperson signalisiert wird, dass die Endposition erreicht ist. In dieser Endposition liegt der Dichtrand 160 dichtend am Dichtsitz 60 der Aufnahmeöffnung 13 an. Damit ist die optimale Position der Filterkartusche 100 erreicht.

In der Fig. 1 b ist eine weitere Ausführungsform der Vorrichtung dargestellt, die sich von der in Fig. 1a gezeigten Vorrichtung dadurch unterscheidet, dass an der Innenseite der Bodenwand 16 zwei erste Fixiermittel 30 in Form von Einstülpungen 31 eingeformt sind, die als Abstandselemente ausgebildet sind. Die Bodenwand 112 der Filterkartusche 100 liegt auf diesen beiden Abstandselementen 30 auf. In dieser Ausführung übernimmt die Bodenwand 112 die Funktion der zweiten Fixiermittel 130.

Die beiden ersten Fixiermittel 30 sind im Strömungskanal 201 zwischen den Auslauföffnungen 113 und den Auslassöffnungen 17 angeordnet und verringern an dieser Stelle den Strömungsquerschnitt. Je nach Ausgestaltung und Abmessung bilden die Fixierelemente 30 jeweils eine Drosseleinrichtung 200.

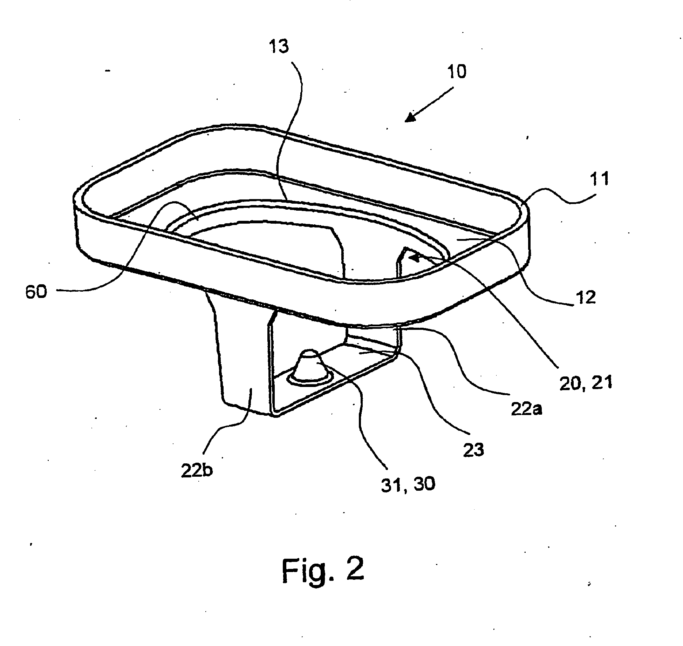

In der Figur 2 ist eine weitere Ausführungsform eines Einlauftrichters 10 dargestellt, der keine Aufnahmekammer 14 besitzt, sondern stattdessen als Halteelement 20 einen Haltebügel 21 , der aus den beiden im Wesentlichen vertikalen Schenkeln 22 a, b und einer Traverse 23 besteht. Dieser Haltebügel 21 überspannt die Aufnahmeöffnung 13 unterhalb der Aufnahmeöffnung 13, so dass eine Filterkartusche (nicht dargestellt) eingesetzt werden kann. Die Abmessungen des Haltebügels 21 sind auf die Abmessungen der einzusetzenden Filterkartusche 100 abgestimmt.

Die Traverse 23 besitzt im mittleren Bereich ein erstes Fixierelement 30 in Form einer ersten Einstülpung 31. Diese Einstülpung 31 ist kegelförmig ausgebildet und erstreckt sich senkrecht nach oben. Die dazugehörige Filterkartusche 100 (nicht dargestellt) besitzt im Bereich ihrer Bodenwand eine entsprechende kegel- oder kegelstumpfförmige

Einstülpung (zweite Einstülpung 130), so dass die beiden Fixierelemente beim axialen Einstecken der Filterkartusche 100 zusammenwirken und die Filterkartusche führen. In dieser Ausgestaltung dienen die Fixierelemente 30, 130 als Abstands- und Führungselemente.

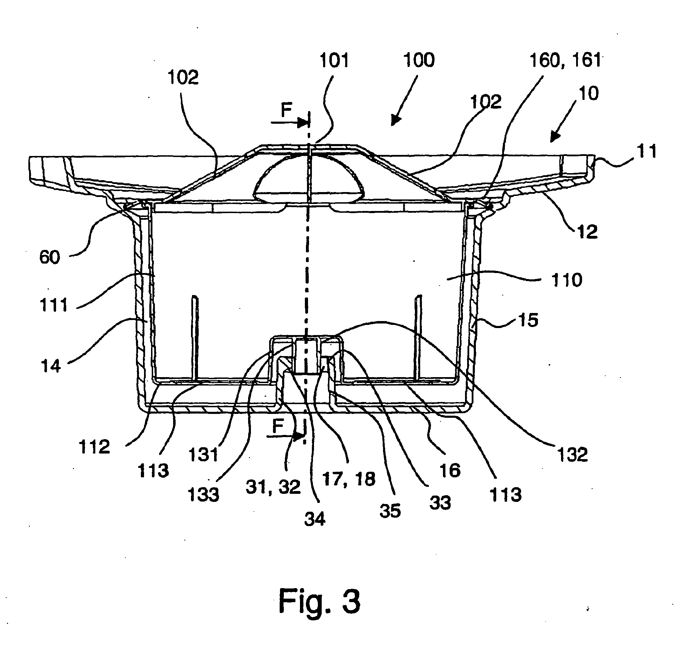

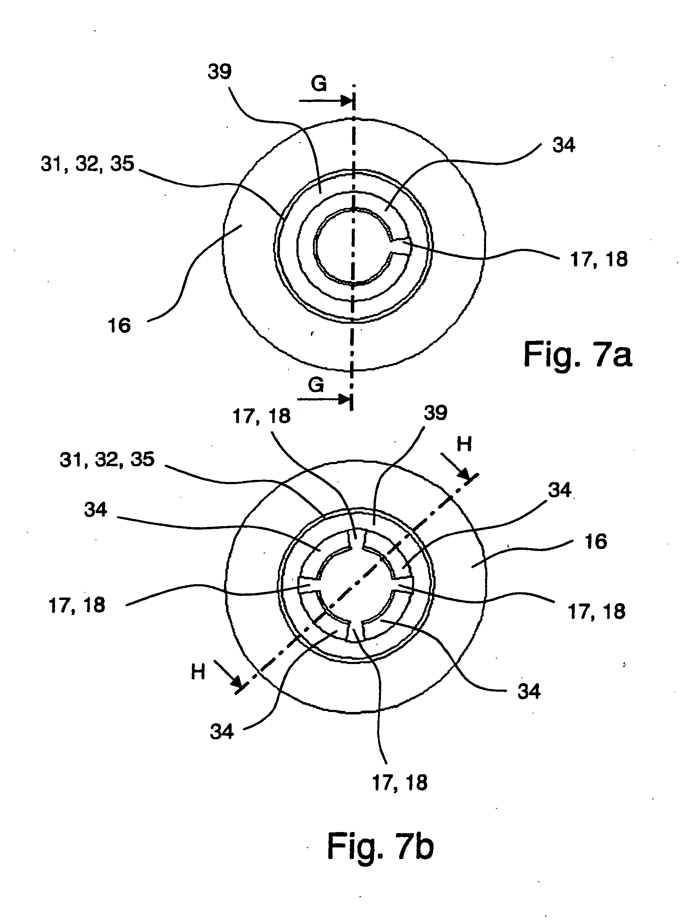

In der Figur 3 ist ein Vertikalschnitt durch eine weitere Ausführungsform der Vorrichtung dargestellt. Der Einlauftrichter 10, von dem der obere Teil der Übersichtlichkeit halber weggelassen wurde, besitzt in seiner Bodenwand 16 in mittiger Anordnung eine erste Einstülpung 31 , die als kegelstumpfförmiger Hohlkörper 32 ausgebildet ist. Am freien Rand 33 des Hohlkörpers 32 ist innen liegend ein kreisbogenförmiger Wulst 34 angeformt, der wie in der Figur 7a dargestellt ist, keinen geschlossenen Ring bildet, sondern einen Freiraum 18 aufweist, der nach Einsetzen der Filterkartusche die Austassöffnung 17 bildet.

Die Filterkartusche 100 besitzt in ihrer Bodenwand 112 ebenfalls eine Einstülpung 131, in der ein Dom 132 angeformt ist, der sich senkrecht nach unten erstreckt. Wenn die Filterkartusche 100 in die Aufnahmekammer 14 eingesteckt wird, greift der Dom 132 in den kegelstumpfförmigen Hohlkörper 32 ein, wobei die Außenfläche 133 des Doms 132 an dem Wulst 34 entlang gleitet. Der Dom 132 und der Wulst 34 bilden in dieser Ausführungsform erste und zweite Fixiermittel 30, 130, die als Führungselemente dienen. Zwischen der Außenfläche 133 des Doms 132 und der Wand 35 des Hohlkörpers 32 wird die Auslassöffnung 17 gebildet.

In der Figur 3 ist die Filterkartusche 100 zu Beginn des Einsetzvorganges dargestellt. Der Dichtrand 160, der in der hier gezeigten Ausführungsform als Schnapprand 161 ausgebildet ist, befindet sich daher noch nicht in seiner Endposition.

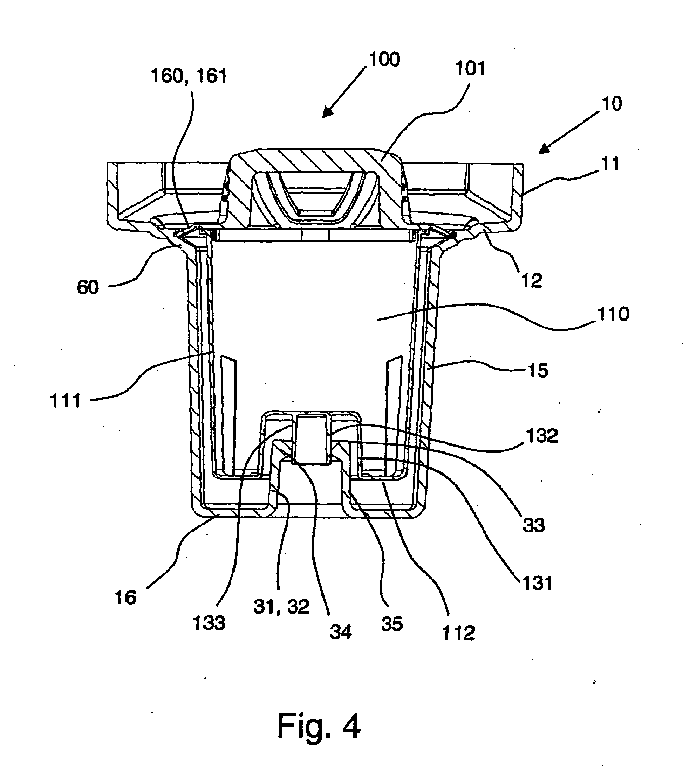

In der Figur 4 ist ein Schnitt längs der Linie F-F der in Figur 3 gezeigten Vorrichtung dargestellt. Es ist zu sehen, dass der Dom 132 am kreisbogenförmigen Wulst 34 anliegt und an dieser Stelle bis auf die Auslassöffnung 17 (in Fig. 4 nicht zu sehen) auch eine Abdichtung bildet.

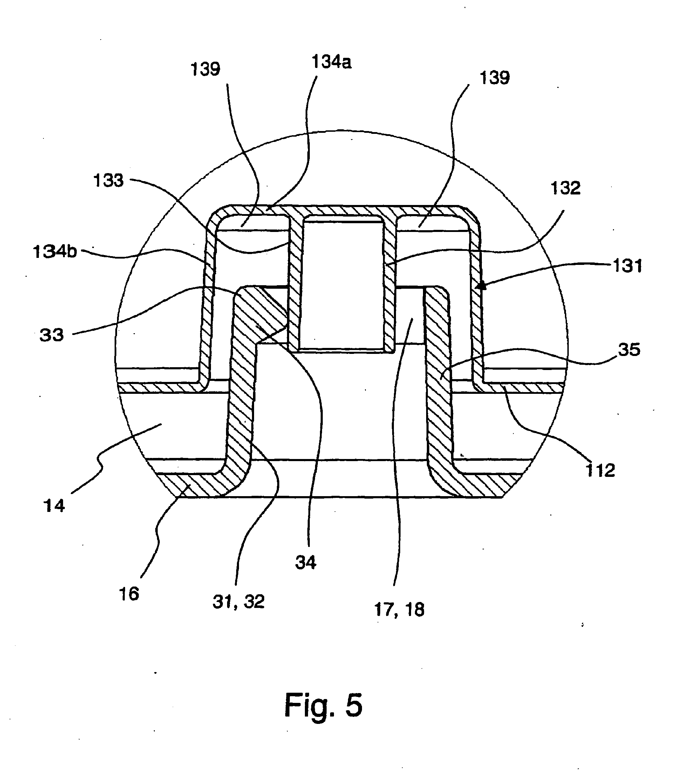

In der Figur 5 ist der untere Bereich von Filterkartusche 100 und Aufnahmekammer 14 vergrößert dargestellt, wobei der Einbauzustand gemäß der Figur 3 dargestellt ist. Die zweite Einstülpung 131 weist eine Bodenwand 134a und eine Ringwand 134b auf, die sich von der Bodenwand 112 nach oben erstreckt. An der Unterseite der Bodenwand 134a sind Abstandsrippen 139 angeformt.

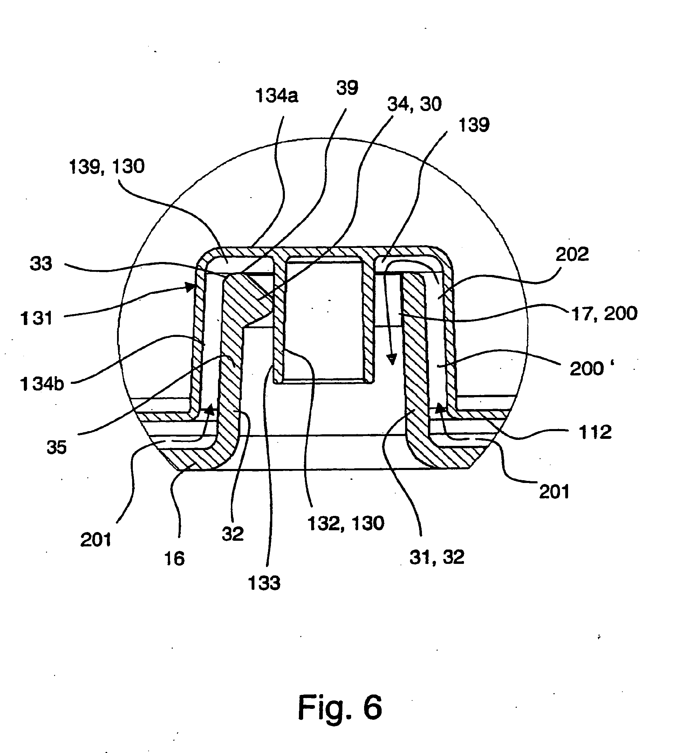

In der Figur 6 hat die Filterkartusche 100 ihre Endposition und damit ihre Dichtposition erreicht. Zwischen der Bodenwand 112 der Filterkartusche 100 und der Bodenwand 16 der Aufnahmekammer 14 wird ein Strömungskanal 201 gebildet, der im Bereich der beiden Einstülpungen 31 , 131 in einen aufsteigenden Ringkanal 202 übergeht, der zwischen Wand 35 des Hohlkörpers 32 und der Ringwand 134b gebildet wird. Der Querschnitt des Ringkanals 202 ist kleiner als der des Strömungskanals 201, so dass eine Drosseleinrichtung 200' gebildet wird.

Der Ringkanal 202 bildet allerdings nur dann die Drosseleinrichtung 200', wenn die Auslassöffnung 17 einen deutlich größeren Querschnitt aufweist. In der hier gezeigten Ausführungsform ist nur eine einzige Auslassöffnung 17 vorgesehen, die einen geringeren Strömungsquerschnitt aufweist als der Querschnitt des Ringkanals 202, so dass die Auslassöffnung 17 mit der Drosseleinrichtung 200' gleichzusetzen ist. Die beiden Fixierelemente 30, 130 in Form des ringförmigen Wulstes 34 und in Form des Doms 132 bilden somit im zusammengebauten Zustand die Drosseleinrichtung 200. Die Abstandsrippen 139 liegen auf der Stimfläche 39 des Hohlkörpers 32 auf und bilden daher als Abstandselemente zweite Fixiermittel 130.

In der Figur 7b ist eine weitere Ausführungsform des Hohlkörpers 32 dargestellt, die sich von der in Figur 7a dargestellten Ausführungsform dadurch unterscheidet, dass insgesamt vier kreisbogenförmige Wülste 34 beabstandet angeordnet sind, so dass zwischen den Wülsten 34 jeweils Freiräume 18 für die Auslassöffnungen 17 verbleiben. Ob diese Auslassöffnungen in ihrer Gesamtheit eine Drosseleinrichtung 200 bilden, hängt von den Querschnittsabmessungen des Strömungskanals, insbesondere des Ringkanals 202 im Bereich des kegelstumpfförmigen Hohlkörpers 32 ab.

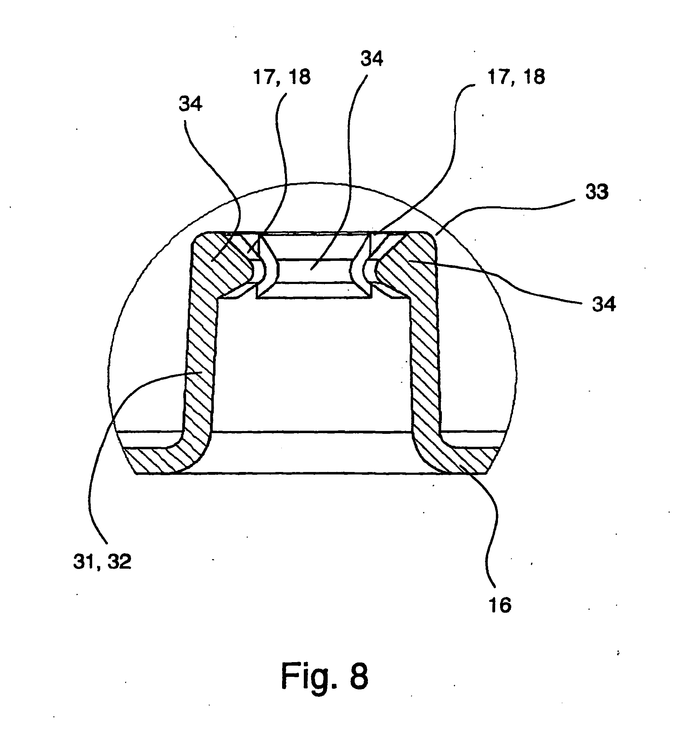

In der Figur 8 ist der Hohlkörper 32 im Vertikalschnitt längs der Linie H-H in Fig. 7b dargestellt. Die Dreiecksform der kreisbogenförmigen Wülste 34 hat den Vorteil, dass die Kontaktfläche mit dem einzuführenden Dom minimiert wird, so dass die Reibungskräfte entsprechend gering ausfallen und ein müheloses Einstecken und Entfernen der Filterkartusche ermöglicht wird.

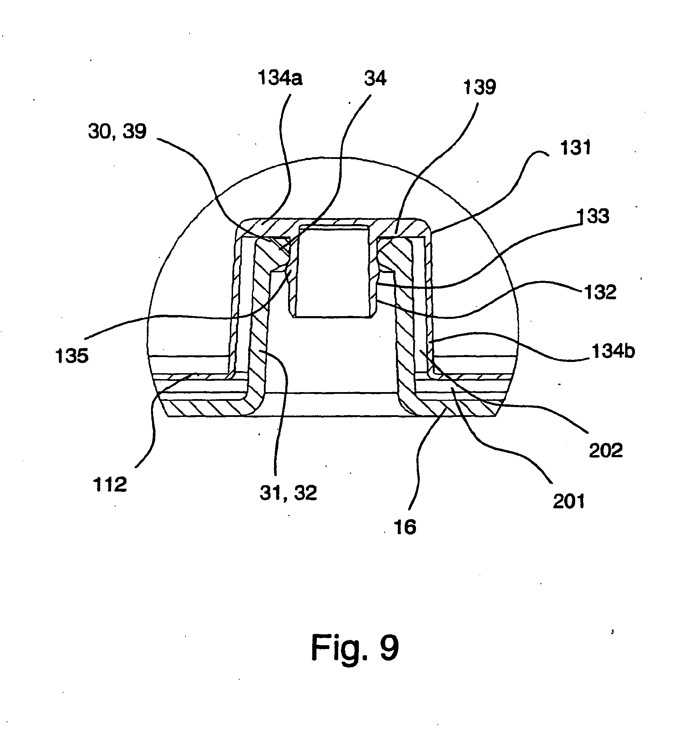

In der Figur 9 ist eine weitere Ausführungsform dargestellt, bei der der Dom 132 an seiner Außenfläche ebenfalls mit einem Wulst (zweiter Wulst) 135 versehen ist. Hierbei verläuft der Schnitt durch den kegelstumpfförmigen Hohlkörper 32 längs der Linie G-G in Fig. 7a. Beim Einstecken der Filterkartusche 100 greift der Dom 132 in den Hohlkörper 32 ein, wobei der ringförmige Wulst 135 den Wulst 34 hintergreift, wenn die Abstandsrippen 139 auf der Stimfläche 39 aufliegen. Zwischen den Abstandsrippen 139 sind Freiräume (hier nicht zu sehen), so dass die Flüssigkeit zur Auslassöffnung 17 strömen kann. Bei dieser Ausführungsform bilden die Wülste 34 und 135 Rastelemente und die Abstandsrippen 139 Abstandselemente, wobei die Stimfläche 39 des Hohlkörpers 32 als erstes Fixiermittel 30 einen Anschlag bildet.

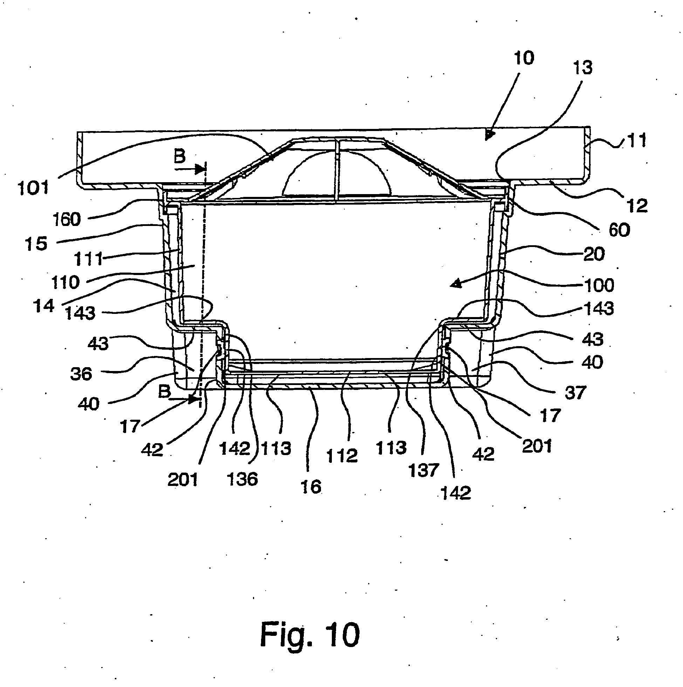

In der Figur 10 ist ein Vertikalschnitt durch einen Einlauftrichter 10 mit eingesetzter Kartusche 100 gemäß einer weiteren Ausführungsform dargestellt. Die Filterkartusche 100 besitzt einen herkömmlichen Dichtrand 160, der im Bereich der Aufnahmeöffnung 13 am Dichtsitz 60 anliegt. In der Umfangswand 15 und der Bodenwand 16 der Aufnahmekammer 14 sind zwei quaderförmige Einstülpungen 36 und 37 eingeformt. Diese Einstülpungen 36, 37 besitzen jeweils zwei Seitenwände 40, 41 (nicht sichtbar), eine Stimwand 42, und eine Deckwand 43. In der Stimwand 42 befindet sich die Auslassöffnung 17.

Entsprechende Einstülpungen 136 und 137, die ebenfalls quaderförmig mit Seitenwänden 140, 141 (in Fig. 17 nicht zu sehen), Stimwand 142 und Deckwand 143 ausgeführt sind, weist auch die Kartusche 100 auf, wobei die entsprechenden Wände von Kartusche und Aufnahmekammer beabstandet zueinander angeordnet sind, so dass zwischen den Wänden Strömungskanäle 201 gebildet werden.

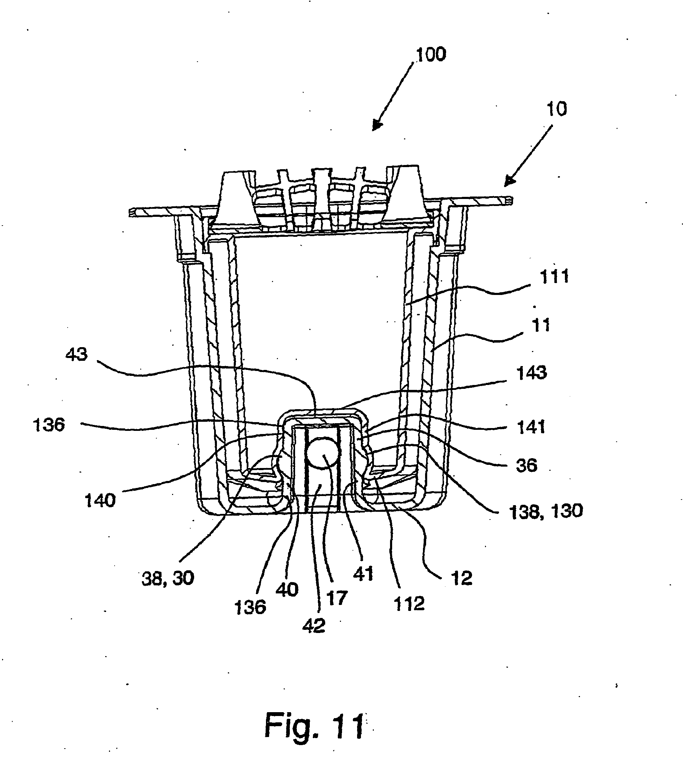

In der Figur 11 ist ein Schnitt längs der Linie B-B dargestellt. In den beiden Seitenwänden 40, 41 , 140, 141 der quaderförmigen Einstülpungen 36, 136 sind Fixiermittel 30, 130 in Form von Rastelementen vorgesehen. Es handelt sich bei den Rastelementen um Rastnocken 38, die in entsprechende Rastvertiefungen 138 eingreifen.

Diese Ausgestaltung der Rastelemente findet sich an beiden quaderförmigen Einstülpungen 36, 37, 136, 137.

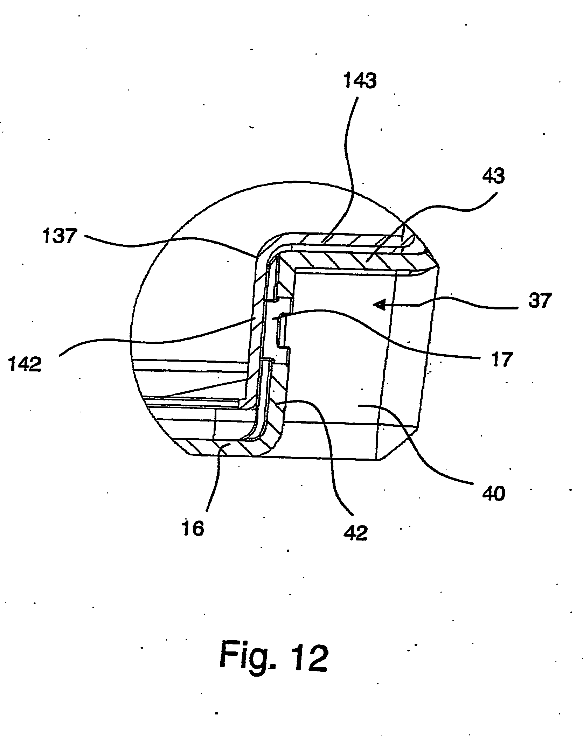

In der Figur 12 ist eine vergrößerte Darstellung der quaderförmigen Einstülpungen 37, 137 dargestellt.

### Bezugszeichenliste

- 10: Einlauftrichter
- 11: Umfangswand
- 12: Trichterbodenwand
- 13: Aufnahmeöffnung
- 14: Aufnahmekammer
- 15: Umfangswand
- 16: Bodenwand
- 17: Auslassöffnung
- 18: Freiraum
- 20: Halteelement
- 21: Haltebügel
- 22a,b: Schenkel
- 23: Traverse
- 30: erstes Fixiermittel
- 31: erste Einstülpung
- 32: kegelstumpfförmiger Hohlkörper
- 33: freier Rand
- 34: kreisbogenförmiger Wulst
- 35: Wand des Hohlkörpers
- 36: quaderförmige Einstülpung
- 37: quaderförmige Einstülpung
- 38: Rastnocke
- 39: Stimfläche
- 40: Seitenwand
- 41: Seitenwand
- 42: Stimwand
- 43: Deckwand
- 60: Dichtsitz
- 100: Filterkartusche
- 101: Kartuschenoberteil
- 102: Einlauföffnung
- 110: Kartuschenunterteil

- 111: Umfangswand
- 112: Bodenwand
- 113: Auslauföffnung
- 130: zweites Fixiermittel
- 131: zweite Einstülpung
- 132: Dom
- 133: Außenfläche
- 134a: Bodenwand
- 134b: Ringwand
- 135: zweiter Wulst
- 136: quaderförmige Einstülpung
- 137: quaderförmige Einstülpung
- 138: Rastvertiefung
- 139: Abstandsrippe
- 140: Seitenwand
- 141: Seitenwand
- 142: Stimwand
- 143: Deckwand
- 160: Dichtrand
- 161: Schnapprand
- 200, 200': Drosseleinrichtung
- 201: Strömungskanal
- 202: Ringkanal

## Patentansprüche

1. Vorrichtung zur Filtration von Flüssigkeiten mit einer Filterkartusche (100), die ein Kartuschenoberteil (101) mit mindestens einer Einlauföffnung (102), ein Kartuschenunterteil (110) mit mindestens einer Auslauföffnung (113) und einen Dichtrand (160) aufweist,
und mit einem Einlauftrichter (10) mit einer Umfangswand (11), mit einer Trichterbodenwand (12) und mit einer in der Trichterbodenwand (12) angeordneten Aufnahmeöffnung (13), in die die Filterkartusche (100) von oben einsteckbar ist, wobei der Dichtrand (160) der Filterkartusche (100) am Rand der Aufnahmeöffnung (13) anliegt, **dadurch gekennzeichnet,**
**dass** der Einlauftrichter (10) unterhalb der Aufnahmeöffnung (13) mindestens ein erstes Fixiermittel (30) aufweist und
**dass** die Filterkartusche (100) unterhalb und beabstandet zum Dichtrand (160) mindestens ein zweites Fixiermittel (130) aufweist, das beim Einstecken der Filterkartusche (100) in die Aufnahmeöffnung (13) mit dem ersten Fixiermittel (30) zusammenwirkt, wobei die ersten und zweiten Fixierelemente (30, 130) Rastelemente sind.

2. Vorrichtung nach Anspruch 1 , **dadurch gekennzeichnet, dass** die Filterkartusche (100) in axialer Richtung in die Aufnahmeöffnung (13) einsteckbar ist.

3. Vorrichtung nach einem der Ansprüche 1 oder 2, **dadurch gekennzeichnet, dass** das zweite Fixiermittel (130) im Bereich der unteren Hälfte der Filterkartusche (100) angeordnet ist.

4. Vorrichtung nach Anspruch 3, **dadurch gekennzeichnet, dass** das zweite Fixiermittel (130) im Bereich des unteren Drittels der Filterkartusche (100) angeordnet ist.

5. Vorrichtung nach einem der Ansprüche 3 oder 4, **dadurch gekennzeichnet, dass** das zweite Fixiermittel (130) im Bereich der Bodenwand (112) der Filterkartusche (100) angeordnet ist.

6. Vorrichtung nach einem der Ansprüche 1 bis 5, **dadurch gekennzeichnet, dass** die ersten und/oder die zweiten Fixiermittel (30, 130) zusätzlich Abstands- und/oder Führungselemente sind.

7. Vorrichtung nach einem der Ansprüche 1 bis 6, **dadurch gekennzeichnet, dass** die Fixiermittel (30, 130) Vorsprünge oder Vertiefungen sind.

8. Vorrichtung nach Anspruch 7, **dadurch gekennzeichnet, dass** die Vorsprünge oder Vertiefungen zylinderförmig, kegelförmig oder kegelstumpfförmig sind.

9. Vorrichtung nach einem der Ansprüche 1 bis 8, **dadurch gekennzeichnet, dass** die Rastelemente Rastnocken (38), Rastvertiefungen (138) oder Ringwülste (34, 135) umfassen.

10. Vorrichtung nach einem der Ansprüche 1 bis 9, **dadurch gekennzeichnet, dass** das erste Fixiermittel (30) an einem an der Unterseite der Trichterbodenwand (12) angeordneten Halteelement (20) angeordnet ist.

11. Vorrichtung nach Anspruch 10, **dadurch gekennzeichnet, dass** das Halteelement (20) ein Haltebügel (21) ist, der unter der Aufnahmeöffnung (13) die Aufnahmeöffnung (13) überspannt.

12. Vorrichtung nach Anspruch 10, **dadurch gekennzeichnet, dass** das Halteelement (20) eine in der Trichterbodenwand (12) angeordnete, mindestens eine Auslassöffnung (17) aufweisende Aufnahmekammer (14) ist, die eine Bodenwand (16) und eine Umfangswand (15) aufweist.

13. Vorrichtung nach Anspruch 12, **dadurch gekennzeichnet, dass** die Bodenwand (16) der Aufnahmekammer (14) mindestens eine erste Einstülpung (31) aufweist und dass die Bodenwand (112) der Filterkartusche (100) mindestens eine die erste Einstülpung (31) übergreifende zweite Einstülpung (131) aufweist.

14. Vorrichtung nach Anspruch 13, **dadurch gekennzeichnet, dass** die erste Einstülpung (31) ein an die Bodenwand (16) der Aufnahmekammer (14) angeformter, nach innen weisender zylinder- oder kegelstumpfförmiger Hohlkörper (32) ist, an dessen freien Rand (33) mindestens ein nach innen weisender kreisbogenförmiger, mindestens eine Auslassöffnung (17) freilassender, erster Wulst (34) angeordnet ist und
dass in der zweiten Einstülpung (131) ein nach außen weisender Dom (132) angeordnet ist, der beim Einstecken der Filterkartusche (100) in den zylinder- oder kegelstumpfförmigen Hohlkörper (32) eingreift.

15. Vorrichtung nach Anspruch 14, **dadurch gekennzeichnet, dass** der Dom (132) an seiner Außenseite mindestens einen kreisbogenförmigen zweiten Wulst (135) aufweist, der beim Einstecken der Filterkartusche (100) den ersten Wulst (34) hintergreift.

16. Vorrichtung nach einem der Ansprüche 14 oder 15, **dadurch gekennzeichnet, dass** der Hohlkörper (32) und der Dom (132) jeweils mittig angeordnet sind.

17. Vorrichtung nach einem der Ansprüche 13 bis 16, **dadurch gekennzeichnet, dass** die Aufnahmekammer (14) die erste Einstülpung (31) im Bereich von Boden- und Umfangswand (15, 16) aufweist und
dass die Filterkartusche (100) die zweite Einstülpung (131) ebenfalls in ihrer Umfangs- und Bodenwand (111, 112) aufweist.

18. Vorrichtung nach einem der Ansprüche 13 bis 17, **dadurch gekennzeichnet, dass** die erste und zweite Einstülpung (31, 131) quaderförmig ausgebildet sind.

19. Vorrichtung nach einem der Ansprüche 13 oder 18, **dadurch gekennzeichnet, dass** die erste Einstülpung (31) an zwei ihrer Seitenwände (40, 41) erste Rastmittel und die zweite Einstülpung (131) an zwei ihrer Seitenwände (140, 141) zweite Rastmittel aufweist.

20. Vorrichtung nach einem der Ansprüche 1 bis 19, **dadurch gekennzeichnet, dass** zwischen der Auslauföffnung (113) der Filterkartusche (100) und derAuslassöffnung (17) der Aufnahmekammer (14) mindestens eine Drosseleinrichtung (200, 200') angeordnet ist.

21. Vorrichtung nach Anspruch 20, **dadurch gekennzeichnet, dass** die Drosseleinrichtung (200, 200') die von der Filterkartusche (100) gelieferte Strömungsmenge um > 0 % - 95 % reduziert.

22. Vorrichtung nach einem der Ansprüche 20 oder 21 , **dadurch gekennzeichnet, dass** die Filterkartusche (100) im Bereich zwischen Auslauföffnung (113) und Auslassöffnung (17) beabstandet zur Umfangswand (15) und/oder Bodenwand (16) der Aufnahmekammer (14) angeordnet ist, wodurch ein Strömungskanals (201) gebildet wird und
dass der minimale Querschnitt des Strömungskanals (201, 202) die Drosseleinrichtung (200, 200') bildet.

23. Vorrichtung nach Anspruch 21 oder 22, **dadurch gekennzeichnet, dass** mindestens ein Fixiermittel (30, 130) die Drosseleinrichtung (200, 200') bildet.

24. Vorrichtung nach einem der Ansprüche 17 bis 23, **dadurch gekennzeichnet, dass** die ersten und zweiten Einstülpungen (31, 131) mindestens in Teilbereichen beabstandet zueinander angeordnet sind.

25. Vorrichtung nach einem der Ansprüche 20 oder 21, **dadurch gekennzeichnet, dass** die Auslassöffnung (17) die Drosseleinrichtung (200, 200') bildet, wobei der Querschnitt der Auslassöffnung (17) kleiner ist als der Querschnitt der Auslauföffnung (113) der Filterkartusche (100).

26. Vorrichtung nach einem der Ansprüche 20 bis 25, **dadurch gekennzeichnet, dass** die Drosseleinrichtung (200, 200') bei vorgegebener Filterkartusche (100) durch die Auswahl einer Aufnahmekammer (14) mit entsprechenden Abmessungen oder mit entsprechendem Querschnitt der Auslassöffnung (17) einstellbar ist.

27. Vorrichtung nach einem der Ansprüche 1 bis 26, **dadurch gekennzeichnet, dass** die Auslassöffnung (17) der Aufnahmekammer (14) oberhalb der Auslauföffnung (113) der Filterkartusche (100) angeordnet ist.

28. Filterkartusche, die ein Kartuschenoberteil (101) mit mindestens einer Einlauföffnung (102), ein Kartuschenunterteil (110) mit mindestens einer Auslauföffnung (113) und einen Dichtrand (160) aufweist, **gekennzeichnet durch** mindestens ein Fixiermittel (130), das unterhalb und beabstandet zum Dichtrand (160) angeordnet ist, wobei das Fixiermittel (130) ein Rastelement ist.

29. Filterkartusche nach Anspruch 28, **dadurch gekennzeichnet, dass** das Fixiermittel (130) zusätzlich ein Abstands- und/oder Führungselement ist.

30. Filterkartusche nach Anspruch 28 oder 29, **dadurch gekennzeichnet, dass** das Fixiermittel (130) ein Vorsprung oder eine Vertiefung ist.

31. Filterkartusche nach Anspruch 30, **dadurch gekennzeichnet, dass** der Vorsprung oder die Vertiefung zylinderförmig, kegelförmig oder kegelstumpfförmig ist.

32. Filterkartusche nach einem der Ansprüche 28 bis 31, **dadurch gekennzeichnet, dass** das Fixiermittel eine Rastnocke, eine Rastvertiefung (138) oder ein Ringwulst (135) ist.

33. Filterkartusche nach einem der Ansprüche 28 bis 32, **dadurch gekennzeichnet, dass** das zweite Fixiermittel (130) im Bereich der unteren Hälfte der Filterkartusche (100) angeordnet ist.

34. Filterkartusche nach Anspruch 33, **dadurch gekennzeichnet, dass** das zweite Fixiermittel (130) im Bereich des unteren Drittels der Filterkartusche (100) angeordnet ist.

35. Filterkartusche nach einem der Ansprüche 33 oder 34, **dadurch gekennzeichnet, dass** das zweite Fixiermittel (130) im Bereich der Bodenwand (112) der Filterkartusche (100) angeordnet ist.

36. Filterkartusche nach einem der Ansprüche 28 bis 35, **dadurch gekennzeichnet, dass** das Kartuschenunterteil (110) mindestens eine Einstülpung (131, 136, 137) aufweist.

37. Filterkartusche nach Anspruch 36 , **dadurch gekennzeichnet, dass** in der Einstülpung (131) ein nach außen weisender Dom (132) angeordnet ist.

38. Filterkartusche nach Anspruch 36 oder 37, **dadurch gekennzeichnet, dass** die Einstülpung (136, 137) quaderförmig ausgebildet ist.

## Claims

1. Apparatus for the filtration of liquids, having a filter cartridge (100) which comprises a cartridge upper part (101) with at least one inlet opening (102), a cartridge lower part (110) with at least one outlet opening (113) and a sealing edge (160),
and having an inlet funnel (10) with a peripheral wall (11), having a funnel base wall (12) and a receiving opening (13) which is disposed in the funnel base wall (12) and into which the filter cartridge (100) can be inserted from above, wherein the sealing edge (160) of the filter cartridge (100) lies against the edge of the receiving opening (13),
**characterised in that**
the inlet funnel (10) comprises at least one first fixing means (30) below the receiving opening (13), and
**in that** the filter cartridge (100) has at least one second fixing means (130) below and spaced apart from the sealing edge (160), which second fixing means cooperates with the first fixing means (30) when the filter cartridge (100) is inserted into the receiving opening (13), wherein the first and second fixing elements (30, 130) are latching elements.

2. Apparatus as claimed in claim 1, **characterised in that** the filter cartridge (100) can be inserted in an axial direction into the receiving opening (13).

3. Apparatus as claimed in claim 1 or 2, **characterised in that** the second fixing means (130) is disposed in the region of the lower half of the filter cartridge (100).

4. Apparatus as claimed in claim 3, **characterised in that** the second fixing means (130) is disposed in the region of the lower third of the filter cartridge (100).

5. Apparatus as claimed in any one of claims 3 or 4, **characterised in that** the second fixing means (130) is disposed in the region of the base wall (112) of the filter cartridge (100).

6. Apparatus as claimed in any one of claims 1 to 5, **characterised in that** the first and/or the second fixing means (30, 130) are in addition spacer elements and/or guide elements.

7. Apparatus as claimed in any one of claims 1 to 6, **characterised in that** the fixing means (30, 130) are projections or recesses.

8. Apparatus as claimed in claim 7, **characterised in that** the projections or recesses are cylindrical, conical or frustoconical.

9. Apparatus as claimed in any one of claims 1 to 8, **characterised in that** the latching elements comprise latching cams (38), latching recesses (138) or annular beads (34, 135).

10. Apparatus as claimed in any one of claims 1 to 9, **characterised in that** the first fixing means (30) is disposed on a holding element (20) which is disposed on the underside of the funnel base wall (12).

11. Apparatus as claimed in claim 10, **characterised in that** the holding element (20) is a holding bracket (21) which spans the receiving opening (13) beneath the receiving opening (13)

12. Apparatus as claimed in claim 10, **characterised in that** the holding element (20) is a receiving chamber (14) which is disposed in the funnel base wall (12) and comprises at least one discharge opening (17) and which comprises a base wall (16) and a peripheral wall (15).

13. Apparatus as claimed in claim 12, **characterised in that** the base wall (16) of the receiving chamber (14) comprises at least one first introverted portion (31) and **in that** the base wall (112) of the filter cartridge (100) comprises at least one second introverted portion (131) which engages over the first introverted portion (31).

14. Apparatus as claimed in claim 13, **characterised in that** the first introverted portion (31) is a cylindrical or frustoconical hollow body (32) which is integrally formed on the base wall (16) of the receiving chamber (14), faces inwards and has disposed on its free edge (33) at least one inwardly facing first bead (34) which is in the shape of an arc of a circle and leaves open at least one discharge opening (17), and
**in that** an outwardly facing mandrel (132) is disposed in the second introverted portion (131) and engages into the cylindrical or frustoconical hollow body (32) during insertion of the filter cartridge (100).

15. Apparatus as claimed in claim 14, **characterised in that** the mandrel (132) comprises on its outer side at least one second bead (135) which is in the shape of an arc of a circle and engages behind the first bead (34) during insertion of the filter cartridge (100).

16. Apparatus as claimed in any one of claims 14 or 15, **characterised in that** the hollow body (32) and the mandrel (132) are each disposed centrally.

17. Apparatus as claimed in any one of claims 13 to 16, **characterised in that** the receiving chamber (14) comprises the first introverted portion (31) in the region of the base and peripheral walls (15, 16) and
**in that** the filter cartridge (100) comprises the second introverted portion (131) likewise in its peripheral and base walls (111, 112).

18. Apparatus as claimed in any one of claims 13 to 17, **characterised in that** the first and the second introverted portions (31, 131) are cuboidal in formation.

19. Apparatus as claimed in any one of claims 13 or 18, **characterised in that** the first introverted portion (31) comprises first latching means on two of its side walls (40, 41) and the second introverted portion (131) comprises second latching means on two of its side walls (140, 141).

20. Apparatus as claimed in any one of claims 1 to 19, **characterised in that** at least one throttling device (200, 200') is disposed between the outlet opening (113) of the filter cartridge (100) and the discharge opening (17) of the receiving chamber (14).

21. Apparatus as claimed in claim 20, **characterised in that** the throttling device (200, 200') reduces the flow quantity delivered by the filter cartridge (100) by > 0% - 95%.

22. Apparatus as claimed in any one of claims 20 or 21, **characterised in that** the filter cartridge (100) is disposed in the region between the outlet opening (113) and discharge opening (17) at a spaced interval from the peripheral wall (15) and/or base wall (16) of the receiving chamber (14), whereby a flow channel (201) is formed, and
**in that** the minimum cross-section of the flow channel (201, 202) forms the throttling device (200, 200').

23. Apparatus as claimed in claim 21 or 22, **characterised in that** at least one fixing means (30, 130) forms the throttling device (200, 200').

24. Apparatus as claimed in any one of claims 17 to 23, **characterised in that** the first and second introverted portions (31, 131) are disposed at least in partial regions at a spaced interval with respect to each other.

25. Apparatus as claimed in any one of claims 20 or 21, **characterised in that** the discharge opening (17) forms the throttling device (200, 200'), wherein the cross-section of the discharge opening (17) is smaller than the cross-section of the outlet opening (113) of the filter cartridge (100).

26. Apparatus as claimed in any one of claims 20 to 25, **characterised in that** in the case of a specific filter cartridge (100), the throttling device (200, 200') can be adjusted by selecting a receiving chamber (14) with corresponding dimensions or with a corresponding cross-section of the discharge opening (17).

27. Apparatus as claimed in any one of claims 1 to 26, **characterised in that** the discharge opening (17) in the receiving chamber (14) is disposed above the outlet opening (113) in the filter cartridge (100).

28. Filter cartridge which comprises a cartridge upper part (101) with at least one inlet opening (102), a cartridge lower part (110) with at least one outlet opening (113) and a sealing edge (160), **characterised by** at least one fixing means (130) which is disposed below and a spaced interval from the sealing edge (160), wherein the fixing means (130) is a latching element.

29. Filter cartridge as claimed in claim 28, **characterised in that** the fixing means (130) is in addition a spacer element and/or guide element.

30. Filter cartridge as claimed in claim 28 or 29, **characterised in that** the fixing means (130) is a projection or a recess.

31. Filter cartridge as claimed in claim 30, **characterised in that** the projection or the recess is cylindrical, conical or frustoconical.

32. Filter cartridge as claimed in any one of claims 28 to 31, **characterised**
**in that** the fixing means is a latching cam, a latching recess (138) or an annular bead (135).

33. Filter cartridge as claimed in any one of claims 28 to 32, **characterised**
**in that** the second fixing means (130) is disposed in the region of the lower half of the filter cartridge (100).

34. Filter cartridge as claimed in claim 33, **characterised in that** the second fixing means (130) is disposed in the region of the lower third of the filter cartridge (100).

35. Filter cartridge as claimed in any one of claims 33 or 34, **characterised**
**in that** the second fixing means (130) is disposed in the region of the base wall (112) of the filter cartridge (100).

36. Filter cartridge as claimed in any one of claims 28 to 35, **characterised**
**in that** the cartridge lower part (110) comprises at least one introverted portion (131, 136, 137).

37. Filter cartridge as claimed in claim 36, **characterised in that** an outwardly facing mandrel (132) is disposed in the introverted portion (131).

38. Filter cartridge as claimed in claim 36 or 37, **characterised in that** the introverted portion (136, 137) is cuboidal in formation.

## Revendications

1. Système pour la filtration de liquides, avec une cartouche filtrante (100), présentant une partie supérieure de cartouche (101) avec au moins une ouverture d'admission (102), une partie inférieure de cartouche (110) avec au moins une ouverture d'évacuation (113) et une bordure d'étanchéité (160),
et avec un entonnoir d'admission (10) avec une paroi périphérique (11), avec une paroi de fond d'entonnoir (12) et avec une ouverture de réception (13), disposée dans la paroi de fond d'entonnoir (12), dans laquelle la cartouche filtrante (100) est susceptible d'être enfichée par le haut, la bordure d'étanchéité (160) de la cartouche filtrante (100) prenant appui sur le bord de l'ouverture de réception (13), **caractérisé en ce que**
l'entonnoir d'admission (10) présente, au-dessous de l'ouverture de réception (13), au moins un premier moyen de fixation (30), et
**en ce que** la cartouche filtrante (100) présente, au-dessous et à distance de la bordure d'étanchéité (160), au moins un deuxième moyen de fixation (130) qui, lors de l'enfichage de la cartouche filtrante (100) dans l'ouverture de réception (13), coopère avec le premier moyen de fixation (30), les premier et deuxième éléments de fixation (30, 130) étant des éléments d'accrochage.

2. Système selon la revendication 1, **caractérisé en ce que** la cartouche filtrante (100) est susceptible d'être enfichée en direction axiale dans l'ouverture de réception (13).

3. Système selon l'une des revendications 1 ou 2, **caractérisé en ce que** le deuxième moyen de fixation (130) est disposé dans la zone de la moitié inférieure de la cartouche filtrante (100).

4. Système selon la revendication 3, **caractérisé en ce que** le deuxième moyen de fixation (130) est disposé dans la zone du tiers inférieur de la cartouche filtrante (100).

5. Système selon l'une des revendications 3 ou 4, **caractérisé en ce que** le deuxième moyen de fixation (130) est disposé dans la zone de la paroi de fond (112) de la cartouche filtrante (100).

6. Système selon l'une des revendications 1 à 5, **caractérisé en ce que** les premiers et/ou les deuxièmes moyens de fixation (30, 130) sont en plus des éléments d'espacement et/ou de guidage.

7. Système selon l'une des revendications 1 à 6, **caractérisé en ce que** les moyens de fixation (30, 130) sont des saillies ou des cavités.

8. Système selon la revendication 7, **caractérisé en ce que** les saillies ou cavités sont de forme cylindrique, conique ou tronconique.

9. Système selon l'une des revendications 1 à 8, **caractérisé en ce que** les éléments à cliquet comprennent des ergots d'encliquetage (38), des cavités d'encliquetage (138) ou des bourrelets annulaire (34, 135).

10. Système selon l'une des revendications 1 à 9, **caractérisé en ce que** le premier moyen de fixation (30) est disposé sur un élément de maintien (20) disposé sur la face inférieure de la paroi de fond d'entonnoir (12).

11. Système selon la revendication 10**, caractérisé en ce que** l'élément de maintien (20) est un étrier de maintien (21), couvrant l'ouverture de réception (13) au-dessous de l'ouverture de réception (13).

12. Système selon la revendication 10, **caractérisé en ce que** l'élément de maintien (20) présente une chambre de réception (14), présentant au moins une ouverture d'échappement (17), disposée dans la paroi de fond d'entonnoir (12), la chambre de réception présentant une paroi de fond (16) et une paroi périphérique (15).

13. Système selon la revendication 12, **caractérisé en ce que** la paroi de fond (16) de la chambre de réception (14) présente au moins un premier retroussement intérieur (31), et **en ce que** la paroi de fond (112) de la cartouche filtrante (100) présente au moins un deuxième retroussement intérieur (131) entourant le premier retroussement intérieur (31).

14. Système selon la revendication 13, **caractérisé en ce que** le premier retroussement intérieur (31) est un corps creux (32) à forme cylindrique ou tronconique, tourné vers l'intérieur, formé d'un seul tenant sur la paroi de fond (16) de la chambre de réception (14), corps creux sur le bord (33) libre duquel est disposé au moins un premier bourrelet (34), dégageant au moins une ouverture d'évacuation (17), en forme d'arc de cercle tourné vers l'intérieur, et **en ce que** dans le deuxième retroussement intérieur (131) est disposé un mandrin (132) tourné vers l'extérieur, s'engageant dans le corps creux (32) à forme cylindrique ou tronconique, lors de l'enfichage de la cartouche filtrante (100).

15. Système selon la revendication 14, **caractérisé en ce que**, sur sa face extérieure, le mandrin (132) présente au moins un deuxième bourrelet (135) en forme d'arc de cercle, saisissant par l'arrière le premier bourrelet (34) lors de l'enfichage de la cartouche filtrante (100).

16. Système selon l'une des revendications 14 ou 15, **caractérisé en ce que** le corps creux (32) et le mandrin (132) sont chacun disposés centralement.

17. Système selon l'une des revendications 13 à 16, **caractérisé en ce que** la chambre de réception (14) présente le premier retroussement intérieur (31) dans la zone de la paroi de fond et périphérique (15, 16), et
**en ce que** la cartouche filtrante (100) présente le deuxième retroussement intérieur (131) également dans sa paroi périphérique et de fond (111, 112).

18. Système selon l'une des revendications 13 à 17, **caractérisé en ce que** le premier et le deuxième retroussement intérieur (31, 131) sont conformés en parallélépipède rectangle.

19. Système selon l'une des revendications 13 à 18, **caractérisé en ce que** le premier retroussement intérieur (31) présente des moyens d'encliquetage sur deux de ses parois latérales (40, 41) et le deuxième retroussement intérieur (131) présente des deuxièmes moyens d'encliquetage sur deux de ses parois latérales (140, 141).

20. Système selon l'une des revendications 1 à 19, **caractérisé en ce qu'**au moins un dispositif d'étranglement (200, 200') est disposé entre l'ouverture d'évacuation (113) de la cartouche filtrante (100) et l'ouverture d'échappement (17) de la chambre de réception (14).

21. Système selon la revendication 20, **caractérisé en ce que** le dispositif d'étranglement (200, 200') réduit, d'une valeur > 0 % à 95 %, le débit d'écoulement fourni par la cartouche filtrante (100).

22. Système selon l'une des revendications 20 à 21, **caractérisé en ce que** la cartouche filtrante (100) est disposée dans la zone située entre l'ouverture d'évacuation (113) et l'ouverture d'échappement (17), à distance de la paroi périphérique (15) et/ou de la paroi de fond (16) de la chambre de réception (14), faisant qu'un canal d'écoulement (201) est formé, et
**en ce que** la section transversale minimale du canal d'écoulement (201, 202) forme le dispositif d'étranglement (200, 200').

23. Système selon la revendication 21 ou 22, **caractérisé en ce qu'**au moins un moyen de fixation (30, 130) forme le dispositif d'étranglement (200, 200').

24. Système selon l'une des revendications 17 à 23, **caractérisé en ce que** les premiers et deuxièmes retroussements intérieurs (31, 131) sont disposés à distance les uns des autres, au moins dans des zones partielles.

25. Système selon l'une des revendications 20 ou 24, **caractérisé en ce que** l'ouverture d'échappement (17) forme le dispositif d'étranglement (200, 200'), la section transversale de l'ouverture d'échappement (17) étant plus petite que la section transversale de l'ouverture d'évacuation (113) de la cartouche filtrante (100).

26. Système selon l'une des revendications 20 à 25, **caractérisé en ce que**, pour une cartouche filtrante (100) prédéterminée, le dispositif d'étranglement (200, 200') est réglable par le biais de la sélection d'une chambre de réception (14) ayant des dimensions correspondantes ou d'une section transversale correspondante de l'ouverture d'échappement (17).

27. Système selon l'une des revendications 1 à 26, **caractérisé en ce que** l'ouverture d'échappement (17) de la chambre de réception (14) est disposée au-dessus de l'ouverture d'évacuation (113) de la cartouche filtrante (100).

28. Cartouche filtrante, présentant une partie supérieure de cartouche (101) avec au moins une ouverture d'admission (102), une partie inférieure de cartouche (110) avec au moins une ouverture d'évacuation (113) et une bordure d'étanchéité (160), **caractérisée par** au moins un moyen de fixation (130), disposé au-dessous et à distance de la bordure d'étanchéité (160), le moyen de fixation (130) étant un élément à cliquet.

29. Cartouche filtrante selon la revendication 28, **caractérisée en ce que** le moyen de fixation (130) est en plus un élément d'espacement et/ou de guidage.

30. Cartouche filtrante selon la revendication 28 ou 29, **caractérisée en ce que** le moyen de fixation (130) est une saillie ou une cavité.

31. Cartouche filtrante selon la revendication 30, **caractérisée en ce que** la saillie ou la cavité est de forme cylindrique, conique ou tronconique.

32. Cartouche filtrante selon l'une des revendications 28 à 31, **caractérisée en ce que** le moyen de fixation est un ergot d'encliquetage, une cavité d'encliquetage (138) ou un bourrelet annulaire (135).

33. Cartouche filtrante selon l'une des revendications 28 à 32, **caractérisée en ce que** le deuxième moyen de fixation (130) est disposé dans la zone de la moitié inférieure de la cartouche filtrante (100).

34. Cartouche filtrante selon la revendication 33, **caractérisée en ce que** le deuxième moyen de fixation (130) est disposé dans la zone du tiers inférieur de la cartouche filtrante (100).

35. Cartouche filtrante selon l'une des revendications 33 ou 34, **caractérisée en ce que** le deuxième moyen de fixation (130) est disposé dans la zone de la paroi de fond (112) de la cartouche filtrante (100).

36. Cartouche filtrante selon l'une des revendications 28 à 35, **caractérisée en ce que** la partie inférieure de cartouche (110) présente au moins un retroussement intérieur (131, 136, 137).

37. Cartouche filtrante selon la revendication 36, **caractérisée en ce qu'**un mandrin (132), tourné vers l'extérieur, est disposé dans le retroussement intérieur (131).

38. Cartouche filtrante selon la revendication 36 ou 37, **caractérisée en ce que** le retroussement intérieur (136, 137) est en forme de parallélépipède rectangle.
